# EUROPEAN PATENT SPECIFICATION

(11) **EP 2 520 030 B1**
(45) Date of publication and mention of the grant of the patent: **24.09.2014**
(21) Application number: 09807686.2
(22) Date of filing: 29.12.2009
(51) Int. Cl.: H04B 7/02, H04B 7/08

(54) **METHOD FOR SELECTING A BEST QUALITY SIGNAL AMONG MULTIPLE SIGNALS RECEIVED BY DATA PROCESSORS IN A COMMUNICATION SYSTEM**
VERFAHREN ZUR AUSWAHL EINES SIGNALS VON BESTER QUALITÄT UNTER MEHREREN VON DATENPROZESSOREN IN EINEM KOMMUNIKATIONSSYSTEM EMPFANGENEN SIGNALEN
PROCÉDÉ DE SÉLECTION D'UN SIGNAL DE MEILLEURE QUALITÉ PARMI DE MULTIPLES SIGNAUX REÇUS PAR DES PROCESSEURS DE DONNÉES DANS UN SYSTÈME DE COMMUNICATION

(43) Date of publication of application: 07.11.2012
(73) Proprietor: Motorola Solutions, Inc., Schaumburg, IL 60196 (US)
(72) Inventor: DWORAKOWSKI, Waldemar K., 04-713 Warszawa (PL); MROWIEC, Robert, 32-060 Liszki (PL)
(74) Representative: Treleven, Colin
(86) International application number: PCT/PL2009/000113
(87) International publication number: WO 2011/081537

(56) References cited:
- EP-A1- 1 335 450
- WO-A1-03/039032
- WO-A1-03/058847
- WO-A1-2004/049594
- WO-A2-03/077356
- WO-A2-2005/050899

## Description

### FIELD OF THE DISCLOSURE

The present disclosure relates generally to communication systems and more particularly to a method for selecting a best quality signal among multiple signals received by data processors in a communication system.

### BACKGROUND

In some communication systems, a multi-input data processor is provided to support processing of data from multiple input sources. Such multi-input data processors receive data from multiple input sources and determine best quality data for use in further processing. Conventional systems use a centralized approach for determining best quality data. One such centralized approach employs a prime site and multiple sub sites providing data to the prime site. In such systems, each sub site may receive data from a particular source. However, the data received by each sub site may vary in quality and therefore the sub sites further forward the received data to the prime site, where the prime site processes the incoming data from each of the sub sites to determine best quality data.

In the centralized approach, a prime site typically employs a multi-input data processor to process the incoming data from multiple sub sites for determining best quality data. However, in case of failure of the prime site and/or the multi-input data processor, the system would not be able to determine best quality data. Therefore, conventional systems employing a centralized approach of using a multi-input data processor typically have a single point of failure. Accordingly, there is a need for a solution that would eliminate a single point of failure in communication systems supporting determination of best quality data.

EP-A1-1335450 shows a calibration method for an array antenna. A detecting portion determines an antenna branch having a best received signal, based on signal to interference ratio or bit error rate. The antenna branch with the best received signal is used as a reference branch.

### SUMMARY OF THE INVENTION

In accordance with a first aspect, the invention provides a method in accordance with appended claim 1. In accordance with a second aspect, the invention provides a method in accordance with appended claim 8. In accordance with a third aspect, the invention provides a system in accordance with appended claim 15.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a communication system employing a method for selecting a best quality signal among multiple signals received by data processors.
FIG. 2 is a block diagram illustrating further detail of a data processor employed in the communication system shown in FIG. 1.
FIG. 3 is a flowchart illustrating a method of operation by a data processor for selecting a best quality signal among multiple signals received by the data processors.
FIG. 4 is a message flow diagram illustrating the operation of the communication system in accordance with some embodiments.
FIG. 5 is a flowchart illustrating a method of operation by a data processor for coordinating with other data processors to initiate simulcast transmission of a signal received from an infrastructure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

A method for selecting a best quality signal among a plurality of signals received by data processors in a communication system is provided herein. In operation, a plurality of data processors receives the signal transmitted by a data source. Further, the data processors coordinate with each other to select a best quality signal among the plurality of signals received by the data processors without the utilization or assistance of a centralized server. Specifically, the data processors coordinate with each other to determine a recovered signal, where the recovered signal comprises a representation of the received signal of at least one data processor having a quality measure better than a quality measure associated with each received signal from all other data processors.

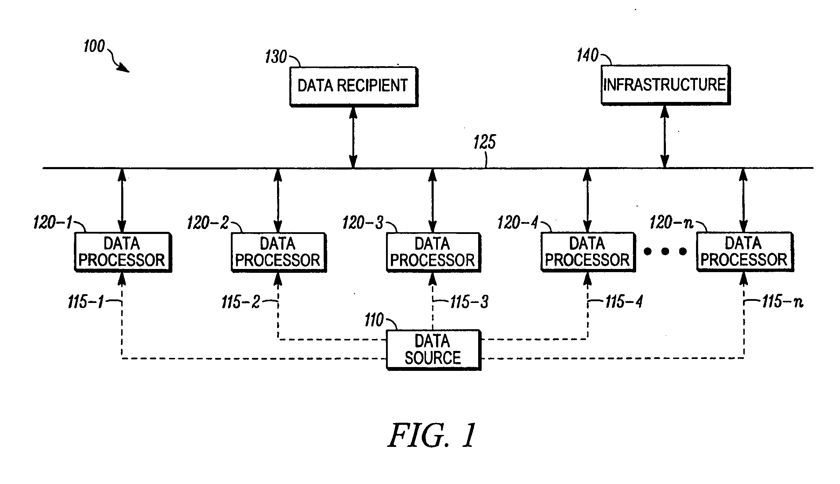

FIG. 1 is a block diagram illustrating a communication system 100 employing a method for selecting a best quality signal among multiple signals received by data processors. The communication system 100 comprises one or more data sources 110, a plurality of data processors 120-1 through 120-n, and one or more data recipients 130. The data source 110 is capable of providing signal data to data processors 120-1 through 120-n via respective communication links 115-1 through 115-n. The communication link 115 is either a wired or wireless link. In accordance with embodiments, the data processors 120 receive the signal data from the data source 110 and coordinate with each other to select a best quality signal among multiple signals received by the data processors 120-1 through 120-n. The data processor 120 is also referred to as self-voting data processors, where the data processors 120 itself are capable of selecting/voting best quality signal in a non-centralized manner.

The data source 110 can be a fixed or portable device that is capable of communicating with the data processors 120 via the communication link 115. Some or all of the data processors 120-1 through 120-n shown in FIG. 1 can be associated to a voting group. As used herein, the term "voting group" refers to a group of data processors 120 that are configured to communicate and coordinate with each other for selecting best quality signal among multiple signals received by the data processors 120 within the same voting group. Each of the data processors 120 can be a fixed or a portable device that is capable of receiving data from a data source 110 via the communication link 115. The data processors 120 communicate with each other via a communication network 125. After the data processors 120 have selected the best quality signal, the data processors 120 further transmit the best quality signal to one or more data recipients 130 via the communication network 125. The communication network 125 includes one or more of private networks, public networks, such as the Internet, wireless networks, such as satellite and cellular networks, local area networks (LANs), wide area networks (WANs), telephone networks, such as the Public Switched Telephone Networks (PSTN), or a combination of networks.

The communication system 100 further includes an infrastructure 140 that provides a signal to a data processor 120-n and directs one or more data processors 120-n to simulcast the signal to one or more data recipients 130. In some embodiments, the data processors 120 after selecting the best quality signal send the best quality signal to the infrastructure 140 for further processing prior to sending the best quality signal to one or more data recipients 130. In one embodiment, the infrastructure 140 identifies a data processor 120-n that has a stored signal selected as the best quality signal and requests the identified data processor 120-n to schedule transmission of signals to one or more data recipients 130.

In accordance with embodiments, the data processors 120-1 through 120-n receive signal from the data source 110. The quality of the signal received by each data processor 120-n varies due to multiple factors. For example, if the data source 110 is a mobile terminal, then the quality of data transmitted from the data source 110 to each data processor 120 is dependent on the quality of a wireless link between the mobile terminal and a base station employing the data processor 120, which in turn is dependent on multiple parameters such as coverage area, signal to noise interference, line of sight and the like. The data processors 120 need to determine a best quality signal among the multiple signals received from the data source 110 for further processing. In accordance with some embodiments, the communication system 100 employs a distributed (non-centralized) approach including operating the data processors 120 to coordinate with each other to select the best quality signal among the multiple signals received from the data source 110. In one embodiment, the data processors 120 select the best quality signal by coordinating with each other to determine a recovered signal, where the recovered signal comprises a representation of the received signal of at least one data processor having a quality measure better than a quality measure associated with each received signal from all other data processors.

The communication system 100 shown in FIG. 1 is only a general representation of communication among devices and thus can alternatively include multiple communication means and/or multiple communication networks. For example, the communication system 100 can be implemented in communications systems that implement wireless communication technologies. In wireless communication systems, multiple fixed or mobile base stations each configured with a data processor 120 can be employed to receive data from a fixed or mobile data source 110 in accordance with some embodiments. Further, the data processors 120 in the respective base stations can be configured to coordinate with each other and select the best quality signal among all the signals received from the data source 110. In one example, communication systems employing radio-frequency identification (RFID) can benefit from the embodiments described herein. Specifically, RFID communication systems employ several RFID readers to read data from RFID tags that can be attached to an object. In such cases, the quality of the data read by each RFID reader may vary and therefore RFID readers can use data processors 120 to coordinate with each other and select best quality data in accordance with the embodiments described herein.

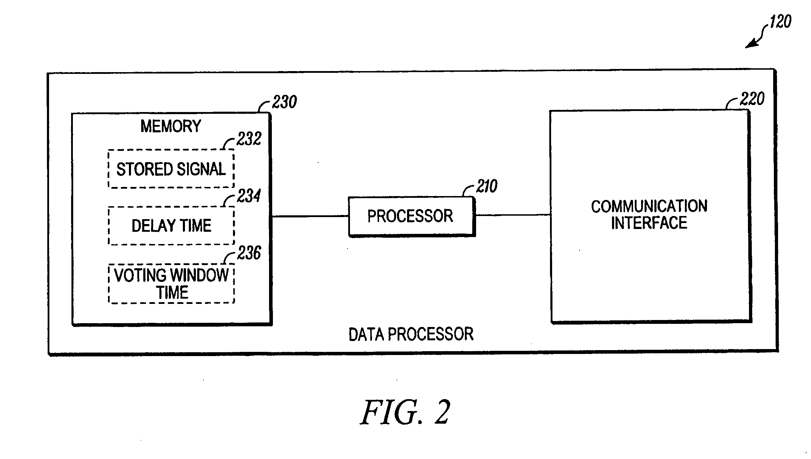

FIG. 2 is a block diagram illustrating further detail of a data processor 120 for operation within the communication system 100 of FIG. 1 in accordance with some embodiments. The data processor 120 includes a processor 210, a communication interface 220 and a memory 230. The processor 210 includes one or more microprocessors, microcontrollers, DSPs (digital signal processors), state machines, logic circuitry, or any other device or devices that process information based on operational or programming instructions. Operational or programming instructions associated with performing a method of selecting best quality signal in accordance with embodiments described herein are stored in the memory 230.

The memory 230 can be an IC (integrated circuit) memory chip containing any form of RAM (random-access memory), a floppy disk, a CD-RW (compact disk with read write), a hard disk drive, a DVD-RW (digital versatile disc with read write), a flash memory card, external subscriber identity module (SIM) card or any other medium for storing digital information. One of ordinary skill in the art will recognize that when the processor 210 has one or more of its functions performed by a state machine or logic circuitry, the memory 230 containing the corresponding operational instructions can be embedded within the state machine or logic circuitry.

The communication interface 220 includes appropriate hardware and software architecture in accordance with known techniques that enable communication of signal data received from the data source 110 to another data processor 120-n. The communication interface 220 also enables communication between the data processor 120 and the data source 110, the data processor 120 and the data recipient 130, and the data processor 120 and the infrastructure 140. In accordance with some embodiments, the communication interface 220 is implemented as a wireless interface for communication with the data source 140 and as a wired interface for communication with other data processors 120-n, and/or infrastructure 140. If implemented as a wireless interface, the communication interface 220 includes an antenna (not shown) that comprises any known or developed structure for radiating and receiving electromagnetic energy in the frequency range containing the wireless carrier frequencies.

As illustrated in FIG. 2, the memory 230 stores and maintains signal 232 (referred to as stored signal 232 or recovered signal 232) that represents a signal data received from the data source 110. In accordance with embodiments, the stored signal 232 represents one of the following: (a) a signal received directly from the data source 110; or (b) a signal received from another data processor 120 with a quality measure better than the originally received signal; or (c) a resultant signal generated based on operations between a previously stored signal and a signal received from another data processor 120-n, where a quality measure of the resultant signal is better than the originally received signal and the signal received from another data processor 120-n.

The memory 230 also stores further information related to a delay time 234 and a voting window time 236. When the data processor 120 receives a signal from the data source 110, the data processor 120 stores the received signal in the memory 230. The data processor 120 then determines a quality measure of the stored signal 232 and further computes a delay time 234 based on the quality measure of the stored signal 232. The data processor 120 delays sending the stored signal 232 to other data processors 120-n for a time period equal to the delay time 234. The delay time 234 computed by each data processor 120 may vary based on the quality measure of its signal received from the data source 110. In one example, the quality measure of the stored signal 232 represents at least one of signal strength or a bit error rate of the received signal. The delay time 234 increases relative to either the increase in the bit error rate or the decrease in the signal strength of the received signal. For example, the delay time 234 for a received signal may be shorter for a signal having signal strength better than a standard signal strength level than a signal having signal strength lower than a standard signal strength level. This delay time 234 enables data processors 120 to transfer signals having better quality measure at a relatively short time duration compared to signals having lower quality measure. The use of delay time 234 to delay transfer of signals also reduces the number of messages communicated between the data processors 120 for purpose of selecting the best quality signal.

The data processors 120 further employ the voting window time period 236 for use in selecting the best quality signal. The voting window time period 236 can be pre-defined in each data processor 120 and the time duration of the voting window time period is defined to be of longer duration than the delay time. As used herein, the voting window time period 236 defines a time period at the end of which the data processors 120 select the best quality signal. In this case, the best quality signal is selected based on determining which one of the data processors 120 has a recovered signal 232 that represents a most recent signal transmitted from one data processor to at least one other data processor prior to the end of the voting window time period 236. In accordance with embodiments, the most recent signal transmitted from one data processor to other data processors just prior to the end of the voting window time period 236 has a quality measure that is better than all other signals received by other data processors of the same voting group, and therefore the data processors 120 select the most recent signal as the best quality signal.

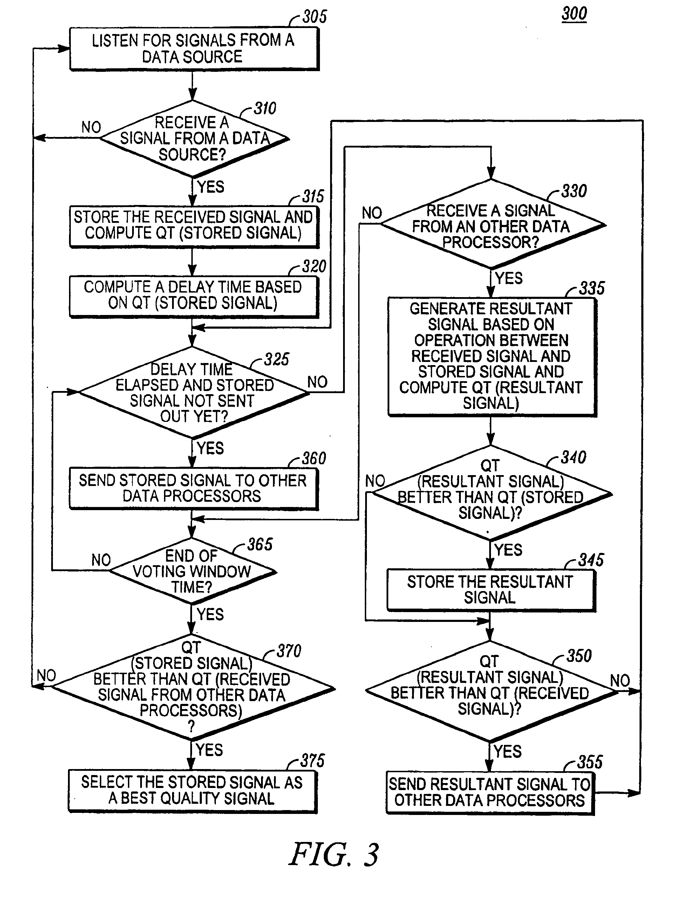

FIG. 3 is a flowchart illustrating a method 300 of operation by a data processor 120 for selecting a base quality signal among multiple signals received by the data processors in the communication system 100, in accordance with some embodiments. At step 305, the method 300 begins with a data processor 120 listening for signals, for example, a signal associated with a data stream from a data source 110. At step 310, the data processor 120 determines if it has received a signal from the data source 110. In one embodiment, the data source 110 may send the signal over the air (OTA) for receipt by multiple data processors 120. When the data processor 120 determines that is it has not received any signal from the data source 110, the data processor 120 returns to step 305 to listen for any signal from the data source 110. When the data processor 120 determines that it has received a signal from the data source 110, the data processor 120 stores the received signal and computes a quality measure of the stored signal 232 (quality measure QT (stored signal)) as shown in step 315. In this case, the stored signal 232 represents a signal received from the data source 110. Next, at step 320, the data processor 120 computes a delay time 234 based on the quality measure of the stored signal 232. The data processor 120 then waits for a time period equal to the delay time 234 to delay sending the stored signal to other data processors 120-n. Next, at step 325, the data processor 120 checks whether the delay time 234 has elapsed and further checks whether it has already sent the stored signal 232 to other data processors 120-n. When the data processor 120 determines that the delay time 234 has elapsed and the stored signal has not been sent to other data processors 120-n, the data processor 120 proceeds to step 360 to send the stored signal to other data processors 120-n within the same voting group.

Returning to step 325, when the data processor 120 determines that the delay time 234 has not yet elapsed, the data processor 120 listens for signals from other data processors 120-n during a time period prior to elapse of the delay time 234. Specifically, at step 330, the data processor 120 determines whether it has received a signal from another data processor 120-n associated with the same voting group. When the data processor 120 determines that it has not received any signal from any other data processor 120-n, the data processor 120 proceeds to step 365 to determine if the voting window time period has ended.

When the data processor 120 determines in step 330 that it has received a signal from another data processor 120-n associated with the same voting group, the data processor 120, at step 335, generates a resultant signal based on operations between the stored signal and the signal received from another data processor 120-n and further computes a quality measure of the resultant signal (QT (resultant signal)). In one embodiment, the resultant signal can be generated based on a product of operations (also referred to as vector operations) between the stored signals and the signal received from another data processor 120-n. For example, the data processor 120 can selectively extract high quality portions from both the stored signal and the signal received from another data processor 120-n to generate a resultant signal. Next, at step 340, the data processor 120 determines whether a quality measure of the resultant signal generated from the operations is better than the quality measure of the stored signal 232. When the data processor 120 determines that the quality measure of the resultant signal is not better than the quality measure of the stored signal, the data processor 120 directly proceeds to step 350.

Returning to step 340, when the data processor 120 determines that the quality measure of the resultant signal is better than the quality measure of the stored signal, the data processor 120 stores the resultant signal, for example, by replacing the currently stored signal 232 with the resultant signal as shown in step 345. Next, at step 350, the data processor 120 determines whether the quality measure of the stored resultant signal is better than the quality measure of the signal received from the other data processor 120-n. The data processor 120 proceeds to step 355 to send the stored resultant signal to other data processors 120-n in the same voting group when the data processor 120 determines that the quality measurement of stored resultant signal is better than the quality measure of the signal received from the other data processor 120-n. The data processor 120 then proceeds to step 325 to determine if the delay time has elapsed. Returning to step 350, when the data processor 120 determines that the quality measure of the stored resultant signal is not better than the quality measure of the signal received from the other data processor, the data processor proceeds to step 325 to determine if the delay time has elapsed.

Returning to step 325, when the data processor 120 determines that the delay time has elapsed and the stored signal 232 has not been sent to other data processors in the same voting group, the data processor 120 sends the stored signal 232 to other data processors 120-n in the voting group. In case the steps 325 and 360 are executed subsequent to step 320, the stored signal 232 represents the signal originally received from the data source 110 and therefore the signal originally received from the data source 110 is sent to other data processors 120-n in the same voting group. In case the steps 325 and 360 are executed subsequent to either step 350 or 355, the stored signal 232 represents the resultant signal and therefore the resultant signal generated as a result of operations between the signal originally received from the data source 110 and the received signal is sent to other data processors 120-n in the voting group as shown in step 360.

Next, at step 365, the data processor 120 determines whether the voting window time period 236 has ended. When the data processor 120 determines the end of the voting window time period 236, the data processor 120 proceeds to step 370 to determine whether the quality measure of the stored signal 232 (original received signal or resultant signal) is better than the quality measure of best signals received by all other data processors 120. The stored signal 232 represents the originally stored signal when the steps are executed in sequence of steps 320, 325, 360, 365, and 370. Otherwise, the stored signal 232 represents the resultant signal which is generated based on operations between currently stored signal and a signal received from at least one other data processor 120-n when the steps are executed in sequence of steps 355, 325, 360, 365, and 370. In one embodiment, the data processor 120 determines whether the quality measure of the stored signal 232 is better than the quality measure of the signal stored currently in other data processors 120-n based on whether the stored signal 232 is a most recent signal among any signal transmitted from one data processor to other data processors. When the data processor 120 determines that the quality measure of the stored signal is better than the quality measures of the signal stored currently in other data processors 120-n, the data processor 120 selects the stored signal as the best quality signal as shown in step 375. Further, the data processor 120 optionally sends the best quality signal either to one or more data recipients 130 or to an infrastructure 140 for further processing.

Returning to step 370, when the data processor 120 determines that the quality measure of the stored signal 232 is not better than the quality measure of the signals stored currently in other data processors 120-n, the data processor 120 proceeds to step 305 to listen for signals from the data source 110. Although, the method 300 is described as being performed by a single data processor, in practice, the method 300 is concurrently performed by multiple data processors (within a voting group) with reference to its respective signal received from the data source 110 to select a best quality signal.

In accordance with some embodiments, the data processor 120 that has the stored signal 232 selected as the best quality signal determines whether the best quality signal needs to be simulcasted to one or more data recipient 130. In case the data processor 120 determines that there is no need to simulcast the best quality signal, the data processor 120 directly sends the best quality signal to the data recipient 130. Otherwise, when the data processor 120 determines to simulcast the best quality signal from multiple data processors 120 to the data recipient 130, the data processor 120 computes a launch time, and further sends the stored signal 232 (selected as the best quality signal) along with the computed launch time to other data processors 120-n associated with a voting group. Each data processor 120 that contributes to the simulcast transmission then simulcasts the best quality signal to the data recipient 130 using the launch time. Specifically, each data processor 120 starts transmission of the best quality signal to the data recipient 130 at the launch time.

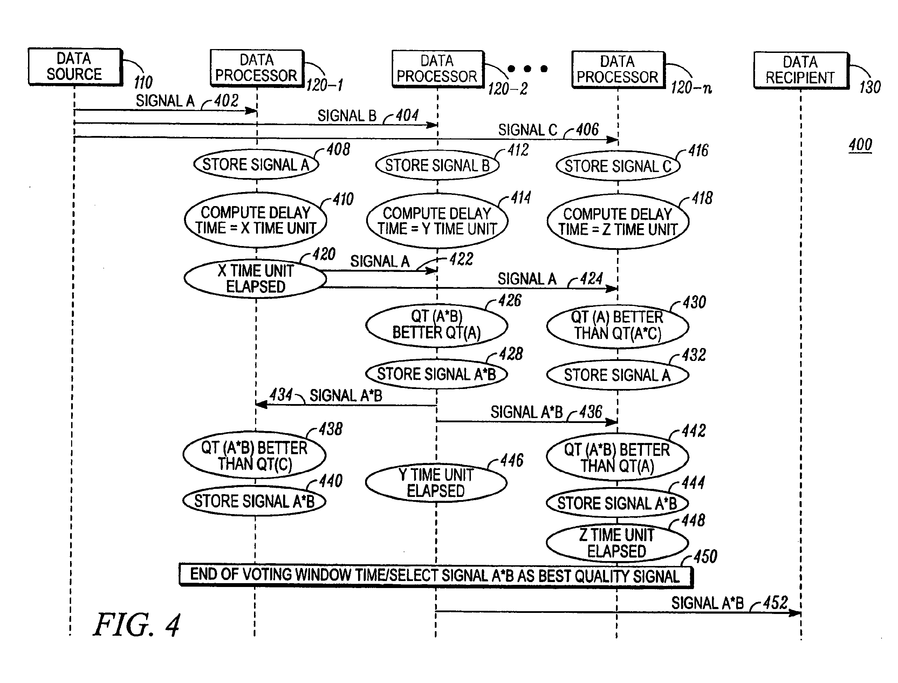

FIG. 4 is a message flow diagram 400 illustrating the operation of the communication system 100 in accordance with some embodiments. The message flow diagram 400 illustrates messages exchanged between the data processors 120-1 through 120-n to select a best quality signal. The message flow diagram 400 also illustrates the steps executed by the data processors 120 in processing the received signals and selecting the best quality signal. The data source 110 transmits messages 402, 404, and 406 each including a signal data associated with a data stream to data processors 120-1, 120-2, and 120-n respectively. The data processor 120-1 receives the message 402 and stores (step 408) signal A contained in the message 402. The data processor 120-1 then computes (step 410) a delay time (X time unit) based on a quality measure of the signal A. The data processor 120-2 receives the message 404 and stores (step 412) signal B. The data processor 120-2 then computes (step 414) a delay time (Y time unit) based on a quality measure of the signal B. The data processor 120-n receives the message 406 and stores (step 416) signal C. The data processor 120-n then computes (step 418) a delay time (Z time unit) based on a quality measure of the stored signal C.

Each data processor 120-1, 120-2, and 120-n delays sending of its respective stored signals (signals A, B, C) for a time period equal to its respective computed delay time (X, Y, Z). For example, the data processor 120-1 determines (step 420) that its delay time of X time unit has elapsed and since it has not received any signal from other data processors 120-2 and 120-n, the data processor 120-1 sends a message 422 including the signal A to the data processor 120-1 and a message 424 including the signal A to the data processor 120-n. The data processor 120-2 determines (step 426) that a quality measure of a resultant signal (A*B) generated based on operations between the signal A and signal B (received from the data source 110) is better than the quality measure of signal A. Therefore, the data processor 120-2 stores (step 428) the resultant signal (A*B) and further sends messages 434 and 436 including the resultant signal (A*B) to data processors 120-1 and 120-n, respectively. In the meantime, the data processor 120-n determines (step 430) that a quality measure of signal A received from the data processor 120-1 is better than quality measure of signal C or quality measure of signal (A*C) generated based on operations between the signal A and signal C. Therefore, the data processor 120-n stores (step 432) the signal A.

The data processor 120-1 receives the message 434 including the resultant signal (A*B) and determines (step 438) that the quality measure of signal (A*B) is better than signal (A) and therefore stores (step 440) the resultant signal (A*B). Similarly, the data processor 120-n receives the message 436 including the resultant signal (A*B) and determines (step 442) that the quality measure of signal (A*B) is better than the quality measure of stored signal (signal A) and therefore stores (step 444) signal (A*B), for example, by replacing the currently stored signal A with signal (A*B). In this example shown in FIG. 4, each data processor 120-1 through 120-n now stores the signal A*B.

The data processor 120-2 determines (step 446) that the delay time (Y time unit) has elapsed and since it has already transmitted its best signal (signal (A*B)) to other data processors, it listens for any signal from other data processors 120-1 and 120-n until the end of voting window time period. Similarly, the data processor 120-n determines (step 448) that the delay time (Z unit) has elapsed and continues to listen for signals from other data processors 120-1 and 120-2. After the data processors 120-1, 120-2, and 120-3 determine (step 450) the end of the voting window time period, each data processor 120-1 through 120-n now has a stored signal (A*B) which represents a most recent signal transmitted from one data processor to other data processor prior to the end of the voting window time period. Accordingly, the data processors 120-1 through 120-n select signal (A*B) as the best quality signal. The data processor 120-2 then sends a message 452 including the best quality signal (signal A*B) to a data recipient 130.

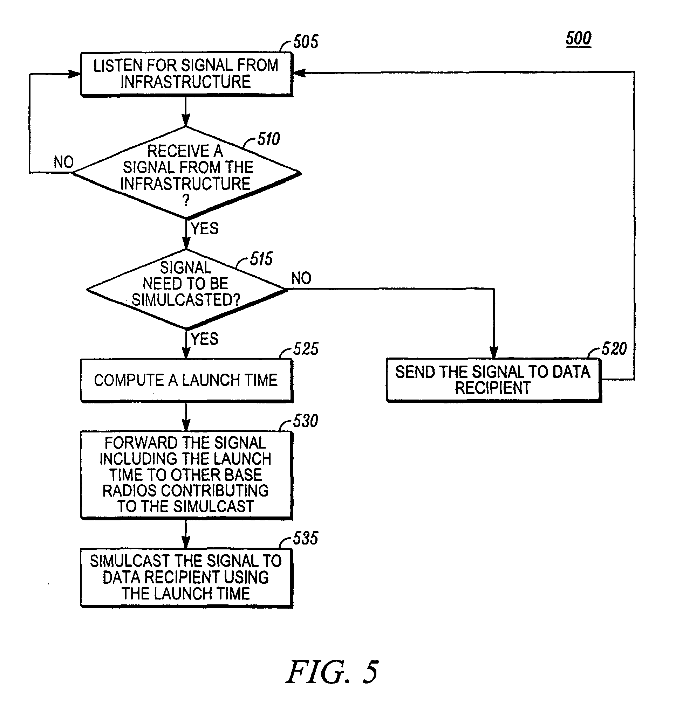

FIG. 5 is a flowchart illustrating a method 500 of operation by a data processor 120 for coordinating with other data processors 120-n to initiate simulcast transmission of signal received from an infrastructure 140. The method 500 begins at step 505 where a data processor 120 listens for signal from the infrastructure 140. Next, at step 510, the data processor 120 determines whether it has received a signal from the infrastructure 140. When the data processor 120 determines that it has not received any signal from the infrastructure 140, the data processor 120 continues to listen for any signal from the infrastructure 140 as shown in step 505. When the data processor 120 determines that it has received a signal from the infrastructure 140, the data processor 120 determines whether the received signal need to be simulcasted to one or more data recipients 130. When the data processor 120 determines that the received signal need not be simulcasted, the data processor 120 sends the signal immediately to one or more data recipients 130 as shown in step 520. Otherwise, when the data processor 120 determines to simulcast the received signal, the data processor 120 computes a launch time as shown in step 525 and further forwards the received signal including the computed launch time to other data processors 120-n associated with the voting group that contribute to the simulcast transmission as shown in step 530. Then, at step 535, the data processor 120 simulcasts the received signal to the one or more data recipients 130 at the launch time. Specifically, each data processor 120 that contributes to the simulcast transmissions starts transmission of the signal at the launch time. In this manner, the data processors 120 can itself coordinate with each other to schedule transmission of signals to one or more data recipients 130 without the use of a centralized server.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, or article that comprises, has, includes, contains a list of elements does not include only those elements but may include other elements not expressly listed or inherent to such process, method, or article. An element proceeded by "comprises ...a", "has ...a", "includes ...a", "contains ... a" does not, without more constraints, preclude the existence of additional identical elements in the process, method, or article that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method (300) for selecting a best quality signal among a plurality of signals received by data processors in a communication system (100), the method (300) comprising:
transmitting a signal by a data source (110);
receiving (310) the signal by a plurality of data processors (120);
said data processors (120) being configured to communicate and coordinate with each other;
coordinating among the plurality of data processors (120) in a distributed manner to determine a recovered signal, wherein the recovered signal comprises a representation of the received signal of at least one of the plurality of data processors (120) having a quality measure better than a quality measure associated with each received signal from all other of the plurality of data processors (120); and
selecting (375) the recovered signal as the best quality signal.

2. The method (300) for claim 1, further comprising:
providing the recovered signal to a data recipient (130) after selecting (375) the recovered signal as the best quality signal.

3. The method (300) of claim 1 or claim 2, wherein coordinating among the plurality of data processors (120) further comprises, at each of the plurality of data processors (120):
in response to receiving the signal from the data source (110), storing (315) the recovered signal comprising the representation of the received signal;
delaying sending of the recovered signal to other data processors for a time period equal to a delay time, where the delay time is computed (320) based on the quality measure of the recovered signal;
listening (330) for signals from other data processors during a voting window time period, where the voting window time period is of longer duration than the delay time; and
sending (355) the stored recovered signal to other data processors when the delay time elapses or when the quality measure associated with the stored recovered signal is better than a quality measure of a signal received from all other data processors.

4. The method (300) of claim 3, further comprising, at each of the plurality of data processors (120):
prior to end of the voting window period, receiving (330) a signal from at least one other data processor;
generating (335) a resultant signal based on operations between the recovered signal already stored in the data processor and the signal received from the at least one other data processor;
storing (345) the resultant signal when a quality measure of the resultant signal is better than the quality measure of the recovered signal; and
transmitting (355) the stored resultant signal to other data processors.

5. The method (300) of claim 3, wherein in response to the end of the voting window time period, waiting, by each of the plurality of data processors (120), for a next signal from the data source (110) when the recovered signal is determined not to be the most recent signal transmitted from one data processors to other data processors prior to the end of the voting window time period.

6. The method (300) of any previous claim:
wherein the quality measure of the recovered signal represents at least one of signal strength of the received signal and a bit error rate associated with the received signal; and
wherein the delay time increases relative to either the increase in the bit error rate or the decrease in the signal strength of the received signal.

7. The method (300) of claim 5, further comprising:
receiving at least one other signal by at least one of the plurality of data processors (120) from an infrastructure (140);
computing (525), by the at least one of the plurality of data processors (120), a launch time for further forwarding the received at least one signal to one or more data recipients;
transmitting, by the at least one of the plurality of data processors (120), the received at least one other signal including information related to the launch time to other data processors; and
starting (535) transmission of the at least one other signal by each of the plurality of data processors (120) to the one or more data recipients at the launch time.

8. A method (300) for selecting a best quality signal among a plurality of signals received by data processors (120) in a communication system (100), the method (300) comprising at each of a plurality of data processors (120); said data processors (120) being configured to communicate and coordinate with each other:
receiving (310) a signal from a data source (110);
storing (315) the received signal;
determining (315) a quality measure of the stored signal and computing (320) a delay time based on the quality measure of the stored signal;
delaying (325) sending of the stored signal to other data processors for a time period equal to the delay time;
listening (330) for signals from other data processors during a voting window time period, where the voting window time period is of longer duration than the delay time;
sending (355) the stored signal to other data processors either when the delay time elapses or when the quality measure associated with the stored signal is better than a quality measure of a signal received from other data processors; and
in response to end of the voting window time period, selecting (375) the stored signal as the best quality signal when the stored signal is determined to be a most recent signal transmitted from one data processor to other data processors prior to the end of the voting window time period.

9. The method (300) of claim 8, further comprising
transmitting (535) the stored signal from the data processor to a data recipient (130) after selecting the stored signal as the best quality signal.

10. The method (300) of claim 8, further comprising, at each of the plurality of data processors (120):
prior to end of the voting window period, receiving (330) a signal from at least one other data processor;
generating (335) a resultant signal based on operations between the stored signal and the signal received from the at least one other data processor;
storing (345) the resultant signal when a quality measure of the resultant signal is better than the quality measure of the recovered signal; and
transmitting (355) the stored resultant signal to other data processors.

11. The method (300) of claim 8, wherein in response to the end of the voting window time period, waiting, by each of the plurality of data processors (120), for a next signal from the data source (110) when the stored signal is determined not to be the most recent signal transmitted from one data processor to other data processor prior to the elapse of the voting window time period.

12. The method (300) of any of claims 8-11,
wherein the quality measure of the stored signal represents at least one of signal strength of the received signal and a bit error rate associated with the received signal; and
wherein the delay time increases relative to either the increase in the bit error rate or the decrease in the signal strength of the received signal.

13. The method (300) of any of claims 8-12, further comprising:
determining (515), by the data processor that has the stored signal selected as the best quality signal, whether the stored signal needs to be simulcasted to a data recipient;
computing (525), by the data processor that has the stored signal selected as the best quality signal, a launch time in response to determining that the stored signal needs to be simulcasted to the data recipient;
forwarding (530), by the data processor that has the stored signal selected as the best quality signal, the stored signal including information related to the launch time to one or more data processors; and
simulcasting (535) the stored signal by each data processor contributing to the simulcast to the data recipient (130) using the launch time.

14. The method (300) of any of claims 8-13, further comprising:
receiving (330) at least one other signal by at least one of the plurality of data processors from an infrastructure (140);
computing (525), by the at least one of the plurality of data processors (120), a launch time for further forwarding the received at least one signal to one or more data recipients;
transmitting (530), by the at least one of the plurality of data processors (120), the received at least one other signal including information related to the launch time to other data processors; and
starting (535) transmission of the at least one other signal by each of the plurality of data processors (120) to the one or more data recipients at the launch time.

15. A system for selecting a best quality signal among a plurality of signals, comprising:
a data source (110) for transmitting a signal associated with a data stream; and
a plurality of data processors (120) communicatively coupled to the data source (110), wherein each of the plurality of data processors (120); said data processors (120) being configured to communicate and coordinate with each other:
receives (310) the signal from the data source (110);
stores (315) the received signal;
determines (315) a quality measure of the stored signal and compute (320) a delay time based on the quality measure of the stored signal;
delays (325) sending of the stored signal to other data processors for a time period equal to the delay time;
listens (330) for signals from other data processors during a voting window time period, where the voting window time period is of longer duration than the delay time;
sends (355) the stored signal to other data processors either when the delay time elapses or when the quality measure of the stored signal is better than a quality measure of a signal received from other data processors; and
selects (375) the stored signal as the best quality signal in response to elapse of the voting window time period when the stored signal is determined to be a most recent signal transmitted from one data processor to other data processors prior to the elapse of the voting window time period.

## Patentansprüche

1. Verfahren (300) zur Auswahl eines qualitativ besten Signals aus einer Mehrzahl von Signalen, die durch Datenprozessoren in einem Kommunikationssystem (100) empfangen werden, wobei das Verfahren (300) umfasst:
Übertragen eines Signals durch eine Datenquelle (110);
Empfangen (310) des Signals durch eine Mehrzahl von Datenprozessoren (120);
wobei die Datenprozessoren (120) geeignet sind, zu kommunizieren und sich miteinander zu koordinieren;
Koordinieren unter der Mehrzahl von Datenprozessoren (120) in einer verteilten Art und Weise, um ein wiederhergestelltes Signal zu bestimmen, wobei das wiederhergestellte Signal eine Darstellung des empfangenen Signals von mindestens einem von der Mehrzahl von Datenprozessoren (120) umfasst, das über ein Qualitätsmaß verfügt, das besser als ein Qualitätsmaß ist, das mit jedem empfangenen Signal von allen anderen von der Mehrzahl von Datenprozessoren (120) verknüpft ist; und
Auswählen (375) des wiederhergestellten Signals als das qualitativ beste Signal.

2. Verfahren (300) gemäß Anspruch 1, das weiterhin umfasst:
Bereitstellen des wiederhergestellten Signals an einen Datenempfänger (130) nach einer Auswahl (375) des wiederhergestellten Signals als das qualitativ beste Signal.

3. Verfahren (300) gemäß Anspruch 1 oder Anspruch 2, wobei eine Koordination unter der Mehrzahl von Datenprozessoren (120) bei jedem von der Mehrzahl von Datenprozessoren (120) weiterhin umfasst:
in Reaktion auf einen Empfang des Signals von der Datenquelle (110), Speichern (315) des wiederhergestellten Signals, das die Darstellung des empfangenen Signals umfasst;
Verzögern eines Sendens des wiederhergestellten Signals an andere Datenprozessoren für eine Zeitperiode, die gleich einer Verzögerungszeit ist, wobei die Verzögerungszeit basierend auf dem Qualitätsmaß des wiederhergestellten Signals berechnet (320) wird;
auf Signale von anderen Datenprozessoren während einer Abstimmungsfensterzeitperiode hören (330), wobei die Abstimmungsfensterzeitperiode über eine längere Dauer als die Verzögerungszeit verfügt; und
Senden (355) des gespeicherten wiederhergestelltes Signals an andere Datenprozessoren, wenn die Verzögerungszeit abläuft oder wenn das mit dem gespeicherten wiederhergestelltes Signal verknüpfte Qualitätsmaß besser als ein Qualitätsmaß eines Signals ist, das von allen anderen Datenprozessoren empfangen wird.

4. Verfahren (300) gemäß Anspruch 3, das bei jedem von der Mehrzahl von Datenprozessoren (120) weiterhin umfasst:
vor einem Ende der Abstimmungsfensterperiode, Empfangen (330) eines Signals von mindestens einem anderen Datenprozessor;
Erzeugen (335) eines resultierenden Signals, basierend auf Operationen zwischen dem bereits in dem Datenprozessor gespeicherten wiederhergestellten Signal und dem Signal, das von dem mindestens einen anderen Datenprozessor empfangen wird;
Speichern (345) des resultierenden Signals, wenn ein Qualitätsmaß des resultierenden Signals besser als das Qualitätsmaß des wiederhergestellten Signals ist; und
Übertragen (355) des gespeicherten resultierenden Signals an andere Datenprozessoren.

5. Verfahren (300) gemäß Anspruch 3, wobei, in Reaktion auf das Ende der Abstimmungsfensterzeitperiode, jeder von der Mehrzahl von Datenprozessoren (120) auf ein nächstes Signal von der Datenquelle (110) wartet, wenn bestimmt wird, dass das wiederhergestellte Signal nicht das letzte Signal ist, das von einem Datenprozessor zu einem anderen Datenprozessor vor dem Ende der Abstimmungsfensterzeitperiode übertragen wird.

6. Verfahren (300) gemäß einem der vorangehenden Ansprüche:
wobei das Qualitätsmaß des wiederhergestellten Signals eine Signalstärke des empfangenen Signals und/oder eine Bitfehlerrate, die mit dem empfangenen Signal verknüpft ist, darstellt; und
wobei die Verzögerungszeit relativ zu entweder dem Anstieg der Bitfehlerrate oder der Abnahme der Signalstärke des empfangenen Signals zunimmt.

7. Verfahren (300) gemäß Anspruch 5, das weiterhin umfasst:
Empfangen mindestens eines anderen Signals durch mindestens einen von der Mehrzahl von Datenprozessoren (120) von einer Infrastruktur (140);
Berechnen (525), durch den mindestens einen von der Mehrzahl von Datenprozessoren (120), einer Startzeit, um das empfangene mindestens eine Signal an einen oder mehrere Datenempfänger weiterhin weiterzuleiten;
Übertragen, durch den mindestens einen von der Mehrzahl von Datenprozessoren (120), des empfangenen mindestens einen anderen Signals, das Informationen bezüglich der Startzeit umfasst, an andere Datenprozessoren; und
Starten (535) einer Übertragung des mindestens einen anderen Signals durch jeden von der Mehrzahl von Datenprozessoren (120) an den einen oder die mehreren Datenempfänger zu dem Startzeitpunkt.

8. Verfahren (300) zur Auswahl eines qualitativ besten Signals aus einer Mehrzahl von Signalen, die durch Datenprozessoren (120) in einem Kommunikationssystem (100) empfangen werden, wobei das Verfahren (300) bei jedem von einer Mehrzahl von Datenprozessoren (120) umfasst, wobei die Datenprozessoren (120) geeignet sind, zu kommunizieren und sich miteinander zu koordinieren:
Empfangen (310) eines Signals von einer Datenquelle (110);
Speichern (315) des empfangenen Signals;
Bestimmen (315) eines Qualitätsmaßes des gespeicherten Signals und Berechnen (320) einer Verzögerungszeit, basierend auf dem Qualitätsmaß des gespeicherten Signals;
Verzögern (325) eines Sendens des gespeicherten Signals an andere Datenprozessoren für eine Zeitperiode, die gleich der Verzögerungszeit ist;
auf Signale von anderen Datenprozessoren während einer Abstimmungsfensterzeitperiode hören (330), wobei die Abstimmungsfensterzeitperiode über eine längere Dauer als die Verzögerungszeit verfügt;
Senden (355) des gespeicherten Signals an andere Datenprozessoren, entweder wenn die Verzögerungszeit abläuft, oder wenn das Qualitätsmaß, das mit dem gespeicherten Signal verknüpft ist, besser als ein Qualitätsmaß eines Signals ist, das von anderen Datenprozessoren empfangen wird; und
in Reaktion auf ein Ende der Abstimmungsfensterzeitperiode, Auswählen (375) des gespeicherten Signals als das qualitativ beste Signal, wenn bestimmt wird, dass das gespeicherte Signal ein letztes Signal ist, das von einem Datenprozessor an einen anderen Datenprozessor vor dem Ende der Abstimmungsfensterzeitperiode übertragen wird.

9. Verfahren (300) gemäß Anspruch 8, das weiterhin umfasst:
Übertragen (535) des gespeicherten Signals von dem Datenprozessor an einen Datenempfänger (130), nachdem das gespeicherte Signal als das qualitativ beste Signal ausgewählt worden ist.

10. Verfahren (300) gemäß Anspruch 8, das bei jedem von der Mehrzahl von Datenprozessoren (120) weiterhin umfasst:
vor einem Ende der Abstimmungsfensterperiode, Empfangen (330) eines Signals von mindestens einem anderen Datenprozessor;
Erzeugen (335) eines resultierenden Signals, basierend auf Operationen zwischen dem gespeicherten Signal und dem Signal, das von dem mindestens einen anderen Datenprozessor empfangen wird;
Speichern (345) des resultierenden Signals, wenn ein Qualitätsmaß des resultierenden Signals besser als das Qualitätsmaß des wiederhergestellten Signals ist; und
Übertragen (355) des gespeicherten resultierenden Signals an andere Datenprozessoren.

11. Verfahren (300) gemäß Anspruch 8, wobei, in Reaktion auf das Ende der Abstimmungsfensterzeitperiode, jeder von der Mehrzahl von Datenprozessoren (120) auf ein nächstes Signal von der Datenquelle (110) wartet, wenn bestimmt wird, dass das gespeicherte Signal nicht das letzte Signal ist, das von einem Datenprozessor an einen anderen Datenprozessor vor dem Ablauf der Abstimmungsfensterzeitperiode übertragen wird.

12. Verfahren (300) gemäß einem der Ansprüche 8-11,
wobei das Qualitätsmaß des gespeicherten Signals eine Signalstärke des empfangenen Signals und/oder eine Bitfehlerrate, die mit dem empfangenen Signal verknüpft ist, darstellt; und
wobei die Verzögerungszeit relativ zu entweder dem Anstieg der Bitfehlerrate oder der Abnahme der Signalstärke des empfangenen Signals zunimmt.

13. Verfahren (300) gemäß einem der Ansprüche 8-12, das weiterhin umfasst:
Bestimmen (515), durch den Datenprozessor, der das gespeicherte Signal als das qualitativ beste Signal ausgewählt hat, ob das gespeicherte Signal simultan an einen Datenempfänger übertragen werden soll;
Berechnen (525), durch den Datenprozessor, der das gespeicherte Signal als das qualitativ beste Signal ausgewählt hat, einer Startzeit in Reaktion auf ein Bestimmen, dass das gespeicherte Signal simultan an den Datenempfänger übertragen werden soll;
Weiterleiten (530), durch den Datenprozessor, der das gespeicherte Signal als das qualitativ beste Signal ausgewählt hat, des gespeicherten Signals, das Informationen bezüglich der Startzeit umfasst, an einen oder mehrere Datenprozessoren; und
simultanes Übertragen (535) des gespeicherten Signals durch jeden Datenprozessor, der zu der simultanen Übertragung an den Datenempfänger (130) beiträgt, unter Verwendung der Startzeit.

14. Verfahren (300) gemäß einem der Ansprüche 8-13, das weiterhin umfasst:
Empfangen (330) mindestens eines anderen Signals durch mindestens einen von der Mehrzahl von Datenprozessoren von einer Infrastruktur (140);
Berechnen (525), durch den mindestens einen von der Mehrzahl von Datenprozessoren (120), einer Startzeit, um das empfangene mindestens eine Signal an einen oder mehrere Datenempfänger weiterhin weiterzuleiten;
Übertragen (530), durch den mindestens einen von der Mehrzahl von Datenprozessoren (120), des empfangenen mindestens einen anderen Signals, das Informationen bezüglich der Startzeit umfasst, an andere Datenprozessoren; und
Starten (535) einer Übertragung des mindestens einen anderen Signals durch jeden von der Mehrzahl von Datenprozessoren (120) an den einen oder die mehreren Datenempfänger zu dem Startzeitpunkt.

15. System zur Auswahl eines qualitativ besten Signals aus einer Mehrzahl von Signalen, das umfasst:
eine Datenquelle (110) zur Übertragung eines Signals, das mit einem Datenstrom verknüpft ist; und
eine Mehrzahl von Datenprozessoren (120), die an die Datenquelle (110) kommunikativ gekoppelt sind, wobei jeder von der Mehrzahl von Datenprozessoren (120), wobei die Datenprozessoren (120) geeignet sind, zu kommunizieren und sich miteinander zu koordinieren:
das Signal von der Datenquelle (110) empfängt (310);
das empfangene Signal speichert (315);
ein Qualitätsmaß des gespeicherten Signals bestimmt (315) und basierend auf dem Qualitätsmaß des gespeicherten Signals eine Verzögerungszeit bestimmt (320);
ein Senden des gespeicherten Signals an andere Datenprozessoren um eine Zeitperiode verzögert (325), die gleich der Verzögerungszeit ist;
während einer Abstimmungsfensterzeitperiode auf Signale von anderen Datenprozessoren hört (330), wobei die Abstimmungsfensterzeitperiode von längerer Dauer als die Verzögerungszeit ist;
das gespeicherte Signal an andere Datenprozessoren sendet (355), entweder wenn die Verzögerungszeit abläuft, oder wenn das Qualitätsmaß des gespeicherten Signals besser als ein Qualitätsmaß eines Signals ist, das von anderen Datenprozessoren empfangen wird; und
das gespeicherte Signal als das qualitativ beste Signal auswählt (375), in Reaktion auf einen Ablauf der Abstimmungsfensterzeitperiode, wenn bestimmt worden ist, dass das gespeicherte Signal das letzte Signal ist, das von einem Datenprozessor an einen anderen Datenprozessor vor dem Ablauf der Abstimmungsfensterzeitperiode übertragen wird.

## Revendications

1. Procédé (300) pour sélectionner un signal de meilleure qualité parmi une pluralité de signaux reçus par des processeurs de données dans un système de communication (100), le procédé (300) comprenant :
la transmission d'un signal par une source de données (110) ;
la réception (310) du signal par une pluralité de processeurs de données (120);
lesdits processeurs de données (120) étant configurés pour communiquer et se coordonner les uns avec les autres ;
la coordination entre la pluralité de processeurs de données (120) d'une manière répartie pour déterminer un signal récupéré, dans lequel le signal récupéré comprend une représentation du signal reçu d'au moins l'un de la pluralité de processeurs de données (120) ayant une mesure de qualité meilleure qu'une mesure de qualité associée à chaque signal reçu de tous les autres de la pluralité de processeurs de données (120) ; et
la sélection (375) du signal récupéré en tant que signal de meilleure qualité.

2. Procédé (300) pour la revendication 1, comprenant en outre :
la fourniture du signal récupéré à un destinataire de données (130) après la sélection (375) du signal récupéré en tant que signal de meilleure qualité.

3. Procédé (300) selon la revendication 1 ou la revendication 2, dans lequel la coordination entre la pluralité de processeurs de données (120) comprend en outre, dans chacun de la pluralité de processeurs de données (120) :
en réponse à la réception du signal de la source de données (110), la mémorisation (315) du signal récupéré comprenant la représentation du signal reçu ;
la temporisation de l'envoi du signal récupéré aux autres processeurs de données pendant une période de temps égale à un temps de retard, dans lequel le temps de retard est calculé (320) sur la base de la mesure de qualité du signal récupéré ;
l'écoute (330) des signaux provenant des autres processeurs de données pendant une période de temps de fenêtre de vote, dans lequel la période de temps de fenêtre de vote a une durée plus longue que le temps de retard ; et
l'envoi (355) du signal récupéré mémorisé aux autres processeurs de données lorsque le temps de retard s'est écoulé ou lorsque la mesure de qualité associée au signal récupéré mémorisé est meilleure qu'une mesure de qualité d'un signal reçu de tous les autres processeurs de données.

4. Procédé (300) selon la revendication 3, comprenant en outre, dans chacun de la pluralité de processeurs de données (120) :
avant la fin de la période de fenêtre de vote, la réception (330) d'un signal d'au moins un autre processeur de données ;
la génération (335) d'un signal résultant sur la base d'opérations entre le signal récupéré déjà mémorisé dans le processeur de données et le signal reçu dudit au moins un autre processeur de données ;
la mémorisation (345) du signal résultant lorsqu'une mesure de qualité du signal résultant est meilleure que la mesure de qualité du signal récupéré ; et
la transmission (355) du signal résultant mémorisé aux autres processeurs de données.

5. Procédé (300) selon la revendication 3, comprenant, en réponse à la fin de la période de temps de fenêtre de vote, l'attente, par chacun de la pluralité de processeurs de données (120), d'un signal suivant provenant de la source de données (110) lorsqu'il est déterminé que le signal récupéré n'est pas le signal le plus récent transmis d'un processeur de données aux autres processeurs de données avant la fin de la période de temps de fenêtre de vote.

6. Procédé (300) selon l'une quelconque des revendications précédentes :
dans lequel la mesure de qualité du signal récupéré représente au moins l'un de l'intensité de signal du signal reçu et d'un taux d'erreurs sur les bits associé au signal reçu ; et
dans lequel le temps de retard augmente en relation soit avec l'augmentation du taux d'erreurs sur les bits, soit avec la diminution de l'intensité de signal du signal reçu.

7. Procédé (300) selon la revendication 5, comprenant en outre :
la réception d'au moins un autre signal par au moins l'un de la pluralité de processeurs de données (120) à partir d'une infrastructure (140) ;
le calcul (525), par ledit au moins un de la pluralité de processeurs de données (120), d'un instant de lancement pour acheminer en outre ledit au moins un signal reçu vers un ou plusieurs destinataires de données ;
la transmission, par ledit au moins un de la pluralité de processeurs de données (120), dudit au moins un autre signal reçu comprenant des informations associées à l'instant de lancement aux autres processeurs de données ; et
le lancement (535) de la transmission dudit au moins un autre signal par chacun de la pluralité de processeurs de données (120) aux dits un ou plusieurs destinataires de données à l'instant de lancement.

8. Procédé (300) pour sélectionner un signal de meilleure qualité parmi une pluralité de signaux reçus par des processeurs de données (120) dans un système de communication (100), le procédé (300) comprenant, dans chacun d'une pluralité de processeurs de données (120) ; lesdits processeurs de données (120) étant configurés pour communiquer et se coordonner les uns avec les autres :
la réception (310) d'un signal d'une source de données (110) ;
la mémorisation (315) du signal reçu ;
la détermination (315) d'une mesure de qualité du signal mémorisé et le calcul (320) d'un temps de retard sur la base de la mesure de qualité du signal mémorisé ;
la temporisation (325) de l'envoi du signal mémorisé aux autres processeurs de données pendant une période de temps égale au temps de retard ;
l'écoute (330) des signaux provenant des autres processeurs de données pendant une période de temps de fenêtre de vote, dans lequel la période de temps de fenêtre de vote a une durée plus longue que le temps de retard ;
l'envoi (355) du signal mémorisé aux autres processeurs de données soit lorsque le temps de retard s'est écoulé, soit lorsque la mesure de qualité associée au signal mémorisé est meilleure qu'une mesure de qualité d'un signal reçu des autres processeurs de données ; et
en réponse à la fin de la période de temps de fenêtre de vote, la sélection (375) du signal mémorisé en tant que signal de meilleure qualité lorsqu'il est déterminé que le signal mémorisé est le signal le plus récent transmis par un processeur de données aux autres processeurs de données avant la fin de la période de temps de fenêtre de vote.

9. Procédé (300) selon la revendication 8, comprenant en outre :
la transmission (535) du signal mémorisé du processeur de données à un destinataire de données (130) après la sélection du signal mémorisé en tant que signal de meilleure qualité.

10. Procédé (300) selon la revendication 8, comprenant en outre, dans chacun de la pluralité de processeurs de données (120) :
avant la fin de la période de fenêtre de vote, la réception (330) d'un signal d'au moins un autre processeur de données ;
la génération (335) d'un signal résultant sur la base d'opérations entre le signal mémorisé et le signal reçu dudit au moins un autre processeur de données ;
la mémorisation (345) du signal résultant lorsqu'une mesure de qualité du signal résultant est meilleure que la mesure de qualité du signal récupéré ; et
la transmission (355) du signal résultant mémorisé aux autres processeurs de données.

11. Procédé (300) selon la revendication 8, comprenant, en réponse à la fin de la période de temps de fenêtre de vote, l'attente, par chacun de la pluralité de processeurs de données (120), d'un signal suivant provenant de la source de données (110) lorsqu'il est déterminé que le signal mémorisé n'est pas le signal le plus récent transmis par un processeur de données à un autre processeur de données avant la fin de la période de temps de fenêtre de vote.

12. Procédé (300) selon l'une quelconque des revendications 8 à 11,
dans lequel la mesure de qualité du signal mémorisé représente au moins l'un d'une intensité de signal du signal reçu et d'un taux d'erreurs sur les bits associé au signal reçu ; et
dans lequel le temps de retard augmente en relation soit avec l'augmentation du taux d'erreurs sur les bits, soit avec la diminution de l'intensité de signal du signal reçu.

13. Procédé (300) selon l'une quelconque des revendications 8 à 12, comprenant en outre :
la détermination (515), par le processeur de données dans lequel est mémorisé le signal sélectionné en tant que signal de meilleure qualité, si le signal mémorisé doit être diffusé simultanément vers un destinataire de données ;
le calcul (525), par le processeur de données dans lequel est mémorisé le signal sélectionné en tant que signal de meilleure qualité, d'un instant de lancement en réponse à la détermination que le signal mémorisé doit être diffusé simultanément au destinataire de données ;
l'acheminement (530), par le processeur de données dans lequel est mémorisé le signal sélectionné en tant que signal de meilleure qualité, du signal mémorisé comprenant des informations associées à l'instant de lancement vers un ou plusieurs processeurs de données ; et
la diffusion simultanée (535) du signal mémorisé par chaque processeur de données contribuant à la diffusion simultanée vers le destinataire de données (130) en utilisant l'instant de lancement.

14. Procédé (300) selon l'une quelconque des revendications 8 à 13, comprenant en outre :
la réception (330) d'au moins un autre signal par au moins l'un de la pluralité de processeurs de données à partir d'une infrastructure (140) ;
le calcul (525), par ledit au moins un de la pluralité de processeurs de données (120), d'un instant de lancement pour acheminer en outre au moins un signal reçu vers un ou plusieurs destinataires de données ;
la transmission (530), par ledit au moins un de la pluralité de processeurs de données (120), d'au moins un autre signal reçu comprenant des informations associées à l'instant de lancement aux autres processeurs de données ; et
le lancement (535) de la transmission dudit au moins un autre signal par chacun de la pluralité de processeurs de données (120) aux dits un ou plusieurs destinataires de données à l'instant de lancement.

15. Système pour sélectionner un signal de meilleure qualité parmi une pluralité de signaux, comprenant :
une source de données (110) pour transmettre un signal associé à un flot de données ; et
une pluralité de processeurs de données (120) couplés en communication à la source de données (110), dans lequel chacun de la pluralité de processeurs de données (120) ; lesdits processeurs de données (120) étant configurés pour communiquer et se coordonner les uns avec les autres :
reçoit (310) le signal de la source de données (110) ;
mémorise (315) le signal reçu ;
détermine (315) une mesure de qualité du signal mémorisé et calcule (320) un temps de retard sur la base de la mesure de qualité du signal mémorisé ;
temporise (325) l'envoi du signal mémorisé aux autres processeurs de données pendant une période de temps égale au temps de retard ;
écoute (330) les signaux provenant des autres processeurs de données pendant une période de temps de fenêtre de vote, dans lequel la période de temps de fenêtre de vote a une durée plus longue que le temps de retard ;
envoie (355) le signal mémorisé aux autres processeurs de données soit lorsque le temps de retard s'est écoulé, soit lorsque la mesure de qualité du signal mémorisé est meilleure qu'une mesure de qualité d'un signal reçu des autres processeurs de données ; et
sélectionne (375) le signal mémorisé en tant que signal de meilleure qualité en réponse à l'achèvement de la période de temps de fenêtre de vote lorsqu'il est déterminé que le signal mémorisé est un signal le plus récent transmis par un processeur de données aux autres processeurs de données avant l'achèvement de la période de temps de fenêtre de vote.
